# EUROPEAN PATENT SPECIFICATION

(11) **EP 2 413 300 B1**
(45) Date of publication and mention of the grant of the patent: **13.04.2016**
(21) Application number: 10173982.9
(22) Date of filing: 25.08.2010
(51) Int. Cl.: G08C 19/22, H04B 3/54

(54) **Method and apparatus for sending and receiving hart communications transmission waveforms**
Verfahren und Vorrichtung zum Senden und Empfangen von HART-Kommunikationsübertragungswellenformen
Procédé et appareil d'envoi et de réception de formes d'ondes de transmission pour communications HART

(30) Priority: 29.07.2010 US 368684 P
(43) Date of publication of application: 01.02.2012
(73) Proprietor: Rockwell Automation Limited, Milton Keynes Buckinghamshire MK11 3DR (GB)
(72) Inventor: Meagher, Thomas, Houston,, TX 77084 (US); Creech, Gerald, Danbury, Cambridgeshire CM3 4DE (GB); Agar, Philip, Danbury, Essex CM3 4AJ (GB); Cooper, Alison, Danbury, Chelmsford, Essex CM3 4AJ (GB)
(74) Representative: Roberts, Peter David

(56) References cited:
- DE-A1-102007 046 560
- US-A- 5 272 448

## Description

### BACKGROUND

### a. Field of the Invention

This invention relates to sending and receiving Highway Addressable Remote Transducer (HART) communications transmission waveforms, in particular for an Industrial Process Control System suitable for:
Emergency Shutdown systems
Critical process control systems
Fire and Gas detection and protection systems
Rotating machinery control systems
Burner management systems
Boiler and furnace control systems
Distributed monitory and control systems

Such control systems are applicable to many industries including oil and gas production and refining, chemical production and processing, power generation, paper and textile mills and sewage treatment plants.

### b. Related Art

In industrial process control systems, fault tolerance is of utmost importance. Fault tolerance is the ability to continue functioning safely in the event of one or more failures within the system.

Fault tolerance may be achieved by a number of different techniques, each with its specific advantages and disadvantages

An example of a system which provides redundancy is a Triple Modular Redundancy (TMR) system. Using TMR, critical circuits are triplicated and perform identical functions simultaneously and independently. The data output from each of three circuits is voted in a majority-voting circuit, before affecting the system's outputs. If one of the triplicated circuits fails, its data output is ignored. However, the system continues to output to the process the value (voltage, current level, or discrete output state) that agrees with the majority of the functional circuits. TMR provides continuous, predictable operation.

However, TMR systems are expensive to implement if full TMR is not actually a requirement, and it is desirable to utilise an architecture which provides flexibility so that differing levels of fault tolerance can be provided depending upon specified system requirements.

Another approach to fault tolerance is the use of hot-standby modules. This approach provides a level of fault tolerance whereby the standby module maintains system operation in the event of module failure. With this approach there may be some disruption to system operation during the changeover period if the modules are not themselves fault-tolerant.

Fault tolerant systems ideally create a Fault Containment Region (FCR) to ensure that a fault within the FCR boundary does not propagate to the remainder of the system. This enables multiple faults to co-exist on different parts of a system without affecting operation.

Fault tolerant systems generally employ dedicated hardware and software test and diagnostic regimes that provide very fast fault recognition and response times to provide a safer system.

Safety control systems are generally designed to be 'fail-operational/fail-safe'. Fail operational means that when a failure occurs, the system continues to operate: it is in a fail-operational state. The system should continue to operate in this state until the failed module is replaced and the system is returned to a fully operational state.

An example of fail safe operation occurs, for example if, in a TMR system, a failed module is not replaced before a second failure in a parallel circuit occurs, the second failure should cause the TMR system to shut down to a fail-safe state. It is worth noting that a TMR system can still be considered safe, even if the second failure is not failsafe, as long as the first fault is detected and communicated, and is itself failsafe.

Analogue current loops are used where a field device is to be monitored or controlled remotely over a pair of conductors. Only one current level can be present at any one time. 4-20mA (four to twenty milliamp current loop) is an analogue electrical transmission standard for industrial instrumentation and communication. The signal is provided via a current loop where 4mA represents zero percent signal and 20mA represents the one hundred percent signal. Use of a 4mA signal to represent zero allows an open circuit condition to be detected.

The Highway Addressable Remote Transducer (HART) Communications Protocol is a newer digital industrial automation protocol which can communicate over legacy 4-20mA analogue instrumentation wiring, sharing the pair of wires used by the older system.

The HART protocol makes use of the Bell 202 compatible Frequency Shift Keying (FSK) to superimpose digital communication signals at a low level on top of the 4-20mA. Bell 202 compatible systems use 1,200 Hz for the mark tone (a '1') and 2,200 Hz for the space tone (a '0').

This enables two-way field communication to take place and makes it possible for additional information beyond just the normal process variable to be communicated to/from a smart field instrument. The HART protocol communicates at 1200 bps without interrupting the 4-20mA signal and allows a host application to obtain two or more digital updates per second from a field device. As the digital FSK signal is phase continuous, there is no interference with the 4-20mA signal. DE102007046560A1 relates to a field device having an analog output, i.e., a measuring transducer, for process instrumentation having a 4-20 mA interface as the analog output This document is directed towards an apparatus and method for digital to analogue conversion. In particular, it describes a method for converting a digital value to a 4-20mA analogue signal within a field device, for transmission along a wire.

US5272448 discloses a digital demodulator which provides efficient demodulation of frequency modulated, pulse-width modulated, and other temporally modulated signals. Without employing an analog-to-digital converter, modulating signal information is extracted from a modulated signal as numerical information. For frequency demodulation, a high gain stage is applied to an incoming FM signal to produce a corresponding sequence of square waves. The period between zero-crossings of the square waves is accurately measured to within one clock pulse using a high-speed dock and at least one counter to produce a demodulated signal.

This invention provides a simple method and apparatus for generating and receiving HART signal in an industrial process control apparatus which does not require use of a dedicated HART modem integrated circuit.

### SUMMARY OF THE INVENTION

According to a first aspect of the invention there is provided a method of generating a semi-sinusoidal frequency shift keying waveform signal suitable for communication with HART sensors in a field device for superimposition on an analogue current signal, said method comprising the steps of: generating a digital PWM signal, said digital PWM signal comprising a first low frequency signal encoding digital data and a second, higher frequency PWM signal superimposed on transitions between two levels; and filtering the digital PWM signal using a passive RLC filter.

Preferably the digital PWM signal is a gated with an enable signal, such that the PWM signal is disabled when there is no enable signal present.

According to a second aspect of the invention there is provided an apparatus for generating a semi-sinusoidal frequency shift keying waveform signal suitable for communication with HART sensors in a field device for superposition on an analogue current signal comprising: a microprocessor arranged in operation to generate a digital PWM signal, said digital PWM signal comprising: a first low frequency signal encoding digital data; and a second, higher frequency pulse width modulated signal superimposed on transitions between two levels; and an RLC filter arranged to receive the digital PWM signal.

Preferably the apparatus further comprises a gate between the microprocessor and the RLC filter, and in which the gate receives the digital PWM signal and an enable signal.

The apparatus may, in a preferred embodiment, comprise a pair of capacitors in series with the RLC filter output.

Furthermore, the invention provides an industrial process control apparatus having an input channel for receiving sensor signals on an analogue current loop and/or an output channel for sending sensor signals on an analogue current loop either or both channels may include an apparatus for generating a semi-sinusoidal frequency shift keying waveform signal according to the second aspect of the invention.

### BRIEF DESCRIPTION OF THE DRAWINGS

Embodiments of the invention will now be described, by way of example only, with reference to the accompanying drawings, in which:
Figure 1 is an illustration showing the architecture of a distributed industrial process control system which uses the apparatus and method of the present invention;
Figure 2 illustrates schematically a controller of the industrial process control system illustrated in Figure 1;
Figure 3 illustrates a possible configuration of a controller;
Figure 4 shows various options for an input assembly and output assembly of Figure 3
Figure 5 shows one possible configuration implementing a two out of three voting strategy;
Figure 6 illustrates a second possible configuration for a two out of three voting strategy;
Figure 7 is a schematic illustration showing an input module;
Figure 8 is a circuit diagram of an analogue input termination assembly according to the present invention;
Figure 9 is a diagram of an input channel;
Figure 10 is a block diagram illustrating a HART input module according to the present invention;
Figures 11 a and 11 b illustrate waveforms for generating a HART signal;
Figure 12 illustrates a bandpass characteristic of bandpass filter suitable for use in receiving and decoding a HART signal; and
Figures 13a to 13c illustrate waveforms at various stages of decoding a HART signal.

### DETAILED DESCRIPTION

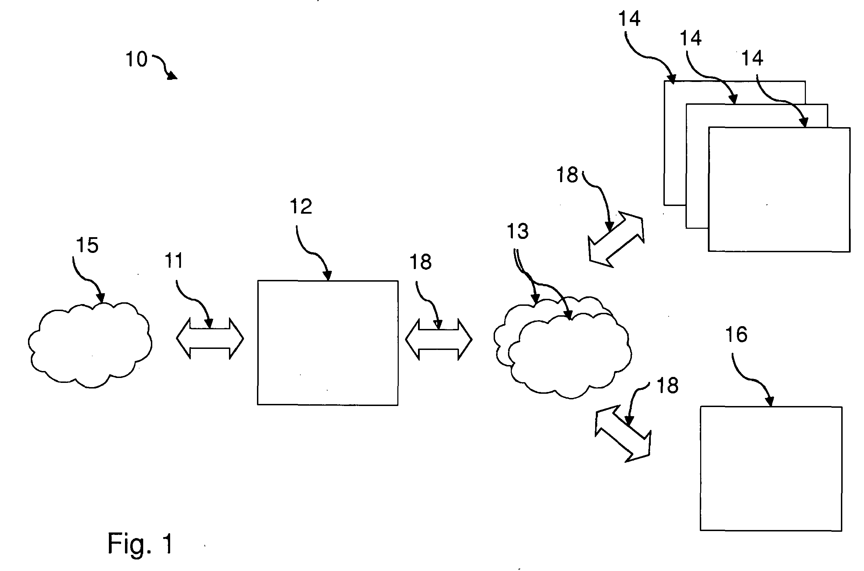

In the Industrial Process Control System shown in Figure 1, a distributed architecture is designed to be used in different SIL (Safety Integrity Level) environments, so that if a high SIL is required it can be provided, but if a low SIL is all that is needed the system can be reduced in complexity in order to reduce unnecessary extra costs.

An exemplary Industrial Process Control System 10, comprises a workstation 12 one or more controllers 14 and a gateway 16. The workstation 12 communicates with the controllers 14 and the gateway 16 via Ethernet connections 18 to one or more control networks 13. Multiple Ethernet connections 18 provide redundancy to improve fault tolerance. The workstation 12 may be connected via a conventional Ethernet connection 11 to another external network 15.

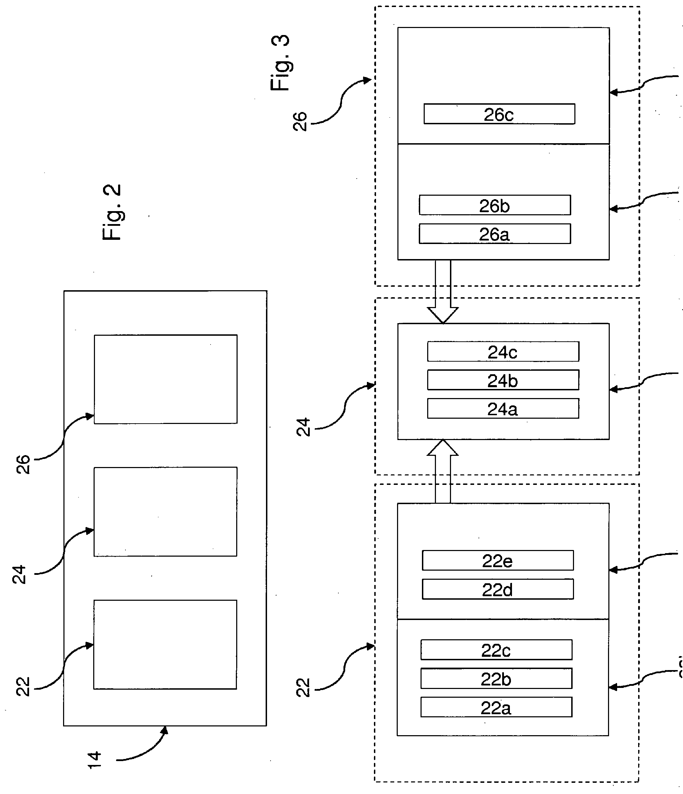

A controller 14 will now be described in more detail with reference to Figures 2 and 3.

Figure 2 illustrates a schematic diagram of the controller 14 comprising an input assembly 22, a processor assembly 24 and an output assembly 26. In this schematic illustration the input assembly 24 and output assembly 26 are on different backplanes but they may equally well share a single backplane.

Assemblies 22, 24, 26 are created from one or more communications backplane portions which have three slots to accommodate up to three modules together with termination assemblies which have one two or three slots, and which interface to field sensors and transducers. A termination assembly may straddle two contiguous backplane portions. A module comprises a plug in card with multiple connectors for plugging onto a communications backplane and a termination assembly.

It will be appreciated that having three slots in a communications backplane portion is one design option and other design options with greater (or fewer) slots are possible without departing from the scope of the invention as defined in the appended claims.

Figure 3 illustrates a possible physical configuration of the controller 14. In this embodiment of the invention, the input assembly 22, output assembly 26 and processor assembly 24 are physically separated from one another by grouping the modules of different types onto separate communications backplanes.

In the example shown, the input assembly 22 comprises two communications backplane portions, 22', 22". The first backplane portion 22' has a triplex input termination assembly and three input modules 22a, 22b, 22c, the second backplane portion 22" has a duplex input termination assembly 22" and two input modules 22d, 22e. The processor assembly 24 comprises a single processor backplane portion 24' having three processor modules 24a, 24b and 24c. The output assembly 26 comprises two backplane portions 26', 26". The first backplane portion 26' has a duplex output termination assembly with two output modules 26a, 26b and the second backplane portion 26" has a simplex output termination assembly with a single output module 26c.

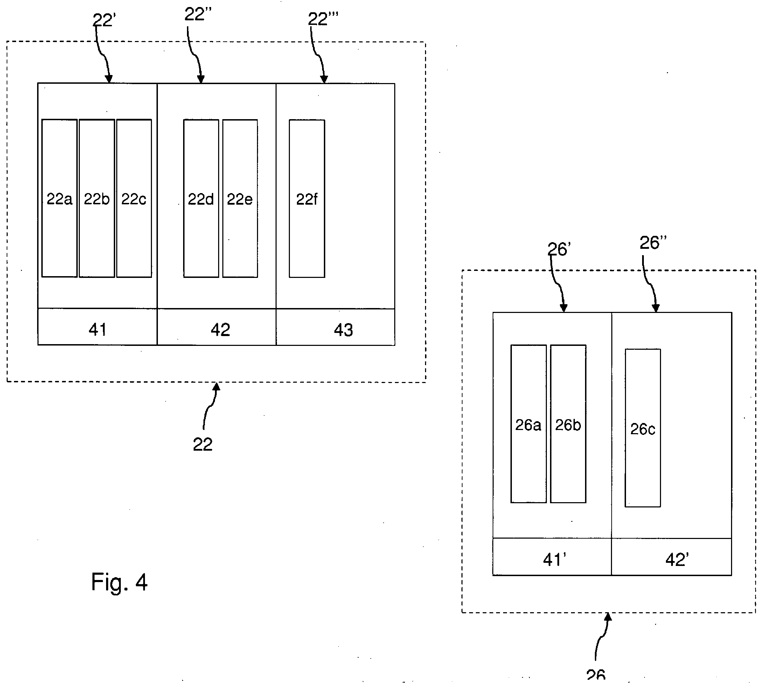

The flexibility of the input assembly 22, will now be described, in more detail with reference to Figure 4.

An input assembly 22 comprises one or more backplane portions and termination assemblies 22' 22" 22'" etc. For example, a triplex portion 22' having three modules 22a, 22b, 22c might be used for high availability requirement, a duplex portion 22" having two modules 22d, 22e might be provided for fault tolerant applications and a simplex portion 22'" with a single modules 22f might be provided for failsafe applications. The termination assemblies may be provided with different types of field conditioning circuits. For example assembly 22' may be provided with a 24V DC field conditioning circuit 41 assembly 22" may be provided with a 120V DC field conditioning circuit 42 and assembly 22'" may be provided with a 4-20mA field conditioning circuit 43. Similarly possible configurations are shown for an output assembly 26. It will be appreciated that numerous configurations of backplane portions and termination assemblies with various different numbers of modules and various different types of field conditioning circuits are possible and the invention is not limited to those shown in these examples.

Where an assembly provides more than one module for redundancy purposes it is possible to replace a failed module with a replacement module whilst the industrial process control system is operational which is also referred to herein as online replacement (i.e. replacement is possible without having to perform a system shutdown). Online replacement is not possible for a simplex assembly without interruption to the process. In this case various "hold last state" strategies may be acceptable or a sensor signal may also be routed to a different module somewhere else in the system.

The processor assembly configures a replacement processor module using data from a parallel module before the replacement module becomes active.

The field conditioning circuits 41, 42, 43 transform a signal received from a sensor monitoring industrial process control equipment to a desired voltage range, and distribute the signal to the input modules as required. Each field conditioning circuit 41, 42, 43 is also connected to field power and field return (or ground) which may be independently isolated on a channel by channel basis from all other grounds, depending on the configuration of the input termination assembly. Independent channel isolation is the preferred configuration because it is the most flexible. The field conditioning circuits 41, 42, 43 comprise simple non active parts and are not online replaceable.

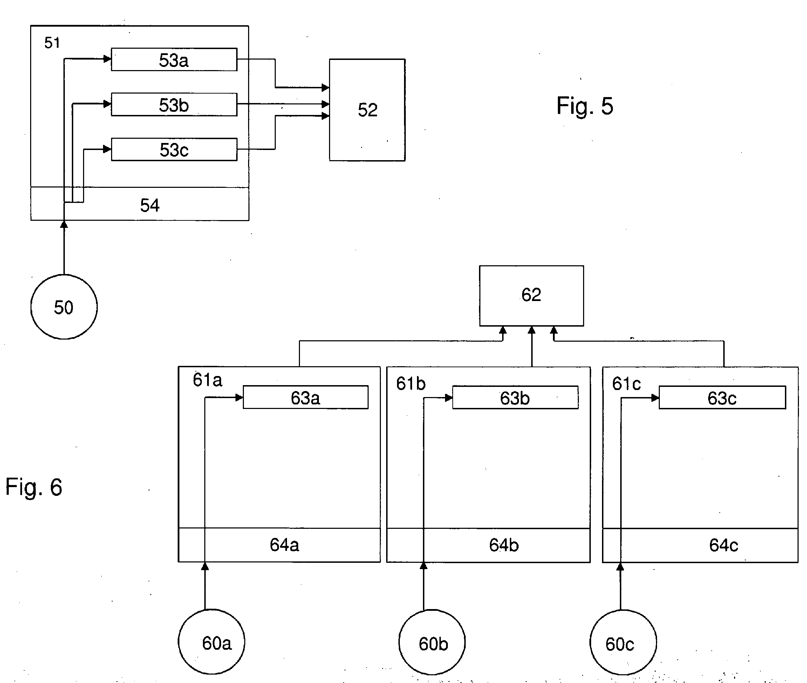

Figure 5 and Figure 6 illustrate the flexibility of the architecture described herein showing different configurations for a triplex system for generating a signal with a high availability requirement. Referring to Figure 5, a three module input assembly 51 receives a signal from a sensor 50 via a field conditioning circuit in termination assembly 54. The field conditioning circuit 54 transforms the signal to a desired voltage range and distributes the signal to three replicated input modules 53a, 53b, 53c. Each input module processes the signal and the results are sent to a two out of three voter 52 to generate a result signal in dependence thereon.

Referring to Figure 6, replicated sensors 60a, 60b, 60c each send a signal to a respective simplex assemblies 61 a, 61 b, 61 c via respective field conditioning circuits in termination assemblies 64a, 64b, 64c. Each input module 63a, 63b, 63c processes the signal and sends an output to a two out of three voter 62 to generate a signal in dependence thereon. It will be appreciated that many variations and configurations are possible in addition to those illustrated here.

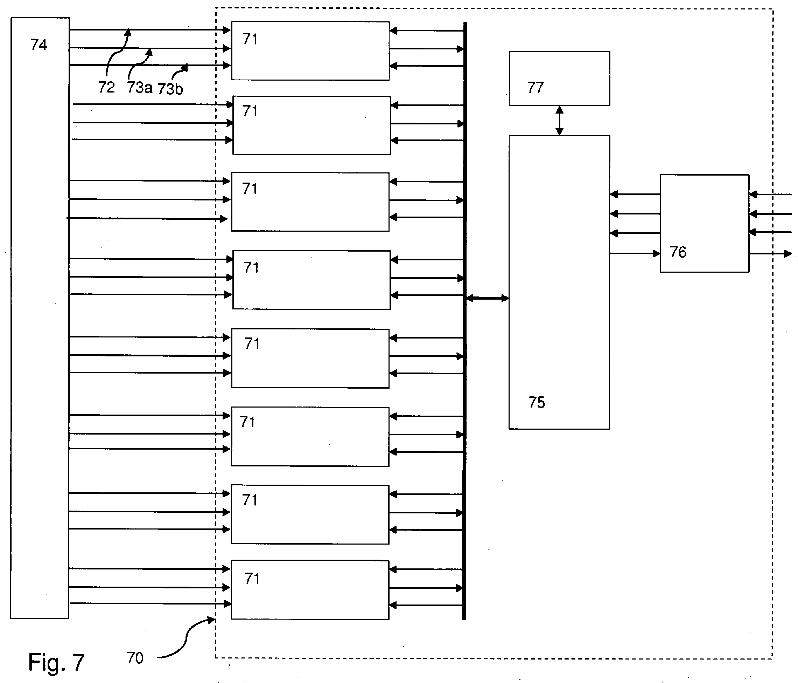

Figure 7 illustrates schematically an input module 70 in accordance with the present invention:
An input module 70 comprises eight isolated channels 71. Each channel 71 receives signals 72, 73a, 73b from field conditioning circuits in a termination assembly 74. Each channel communicates with a field programmable gate array (FPGA) 75 which interfaces to a backplane (not shown) via a non-isolated backplane interface 76. Light emitting diodes (LEDs) 77 are used to indicate status of the module via red and green indicators.

It will be appreciated that having eight channels is one design option and other design options with greater (or fewer) channels are possible without departing from the scope of the invention as defined in the appended claims.

Programmable I/O pins of the FPGA 75 are used to directly drive low power isolated supplies, supplying the channels 71 without the need for additional power amplifiers.

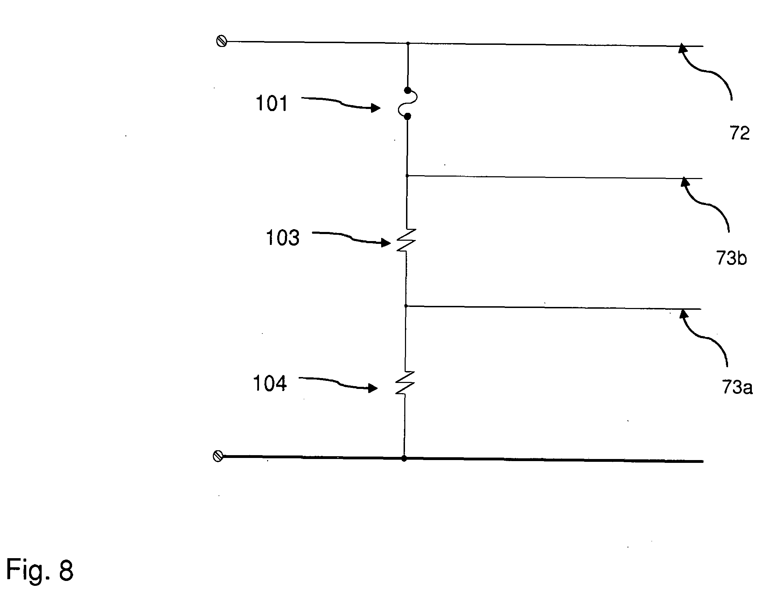

Referring to Figure 8, an analogue input field conditioning circuit for measuring field 4-20 mA analogue current loop signals from a field device comprises a fuse 101 in series with sense resistors 103, 104. The use of the fuse means that the sense resistors 93, 94 only need to operate to the maximum rating of the fuse, which in the preferred embodiment is 50mA. A blown fuse signal 72 is output to the input module to allow the input module to sense and report a blown fuse condition.

The field conditioning circuit shown in Figure 8 outputs a primary sense signal 73a and a secondary sense signal 73b for use by the input channel 71.

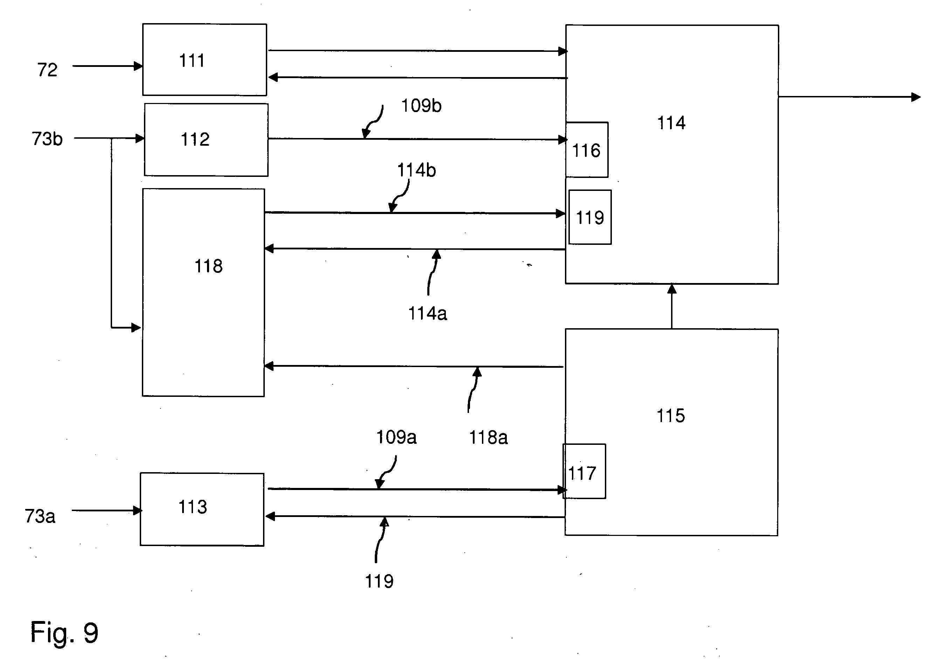

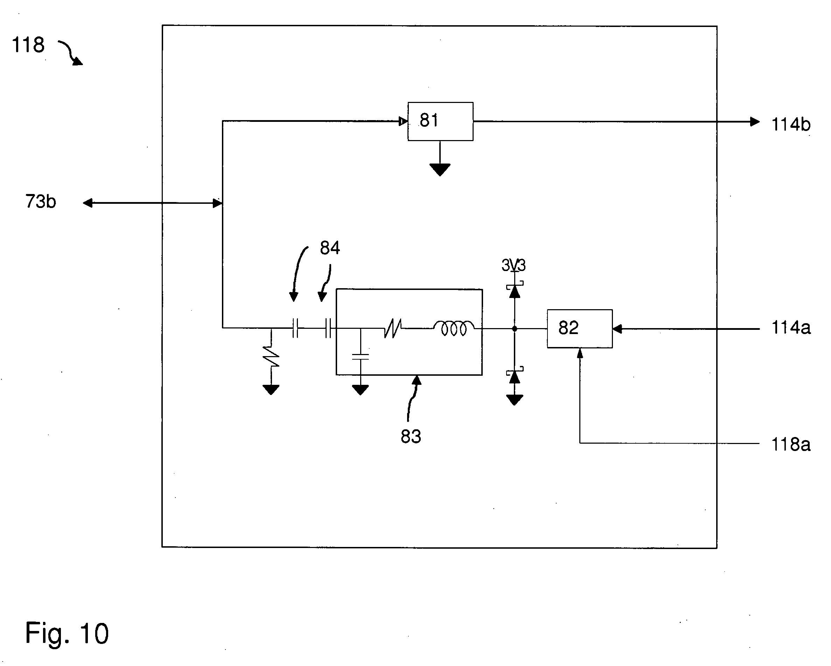

The input channel 71, illustrated in Figure 9, comprises a blown fuse circuit 111, a primary input circuit 113 and a secondary input circuit 112 for detecting the 4-20mA signal, which will not be described further here. The input channel also comprises a HART input/output module 118. The HART I/O module 118 is connected to the analogue input which bears secondary signal 73b and is arranged to send and receive HART data to the field device as will be described in more detail later with reference to Figures 10 to 13. HART output data is generated in dependence upon a digital input signal 114a received from the microprocessor 114. Output from the module 118 is enabled by a HART enable signal 118a supplied by microprocessor 115. A signal 114b representing HART input data is sent to the microprocessor 114 for decoding.

Referring now to Figure 10, the HART input/output module 118 is shown in more detail.

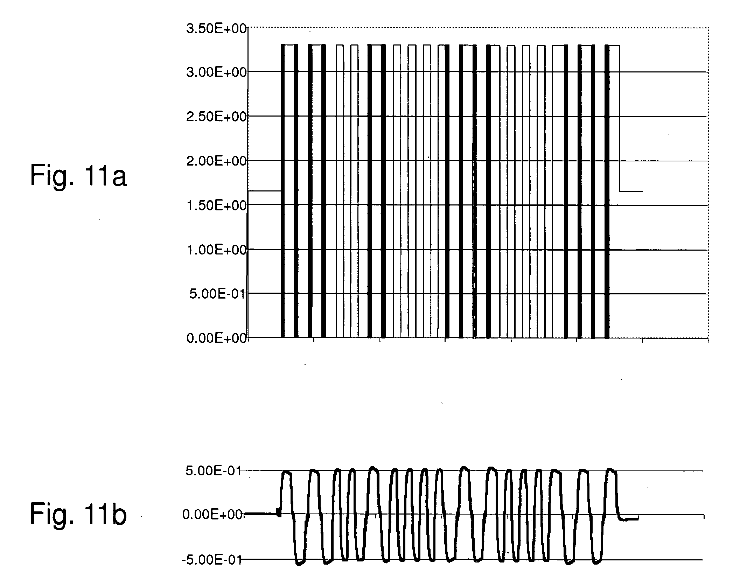

Firstly generation of a HART signal will be described with reference to Figures 11 a and 11 b. Semi-sinusoidal frequency shift keying waveforms that are suitable for communication with HART sensors in a field device are generated using a combination of waveform generation software running on the microcomputer 114, and a passive RLC filter network 83 to provide Bell 202 compatible encoded signals.

The output 114a of the micro-computer 114 is gated with an analogue switch 82 which allows enable signal 118a to prevent the micro-computer from jabbering in the event of a fault in the waveform generation software Enable signal 118a is a "one-shot" type of watchdog permissive which only remains valid for a certain amount of time after being triggered by an external controlling processor. If there is any sort of a fault detected in the channel the controlling processor would not allow microcomputer 115 to set enable signal 118. Therefore, microcomputer 114 cannot start transmitting without permission from a higher authority (the external controlling processor via microcomputer 115). This provides a basic safety feature, since conceivably rogue transmission packets could have unpredictable effects if unexpectedly received by a transducer. Two series capacitors 84 are provided on the output to prevent a short-circuit on either one of them from affecting the HART output signal, or the 4-20mA analogue value that may be present on it.

Figure 11 a illustrates an input digital waveform signal 114a received from the microprocessor 114. The use of the passive RLC network 83 greatly improves the fidelity of the output waveform as shown in Figure 11 b. A higher frequency PWM signal is (about 100 KHz, represented by the thick edges in the waveform in Figure 11a) superimposed on the leading and trailing edges of the 1200 Hz cycles (representing spaces/zeros) to control the slew rate and reduce the distortion of the output waveform 11 b.

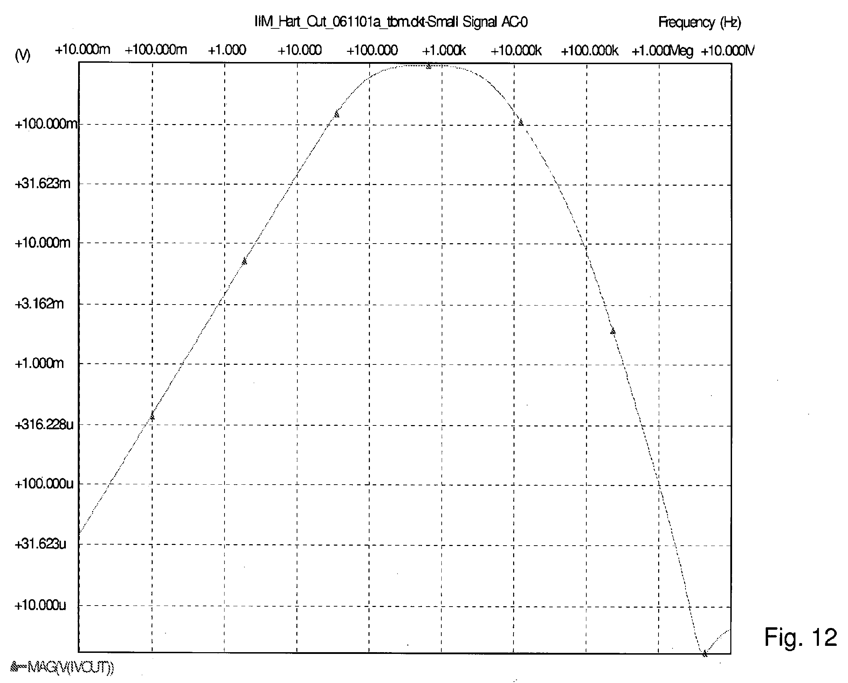

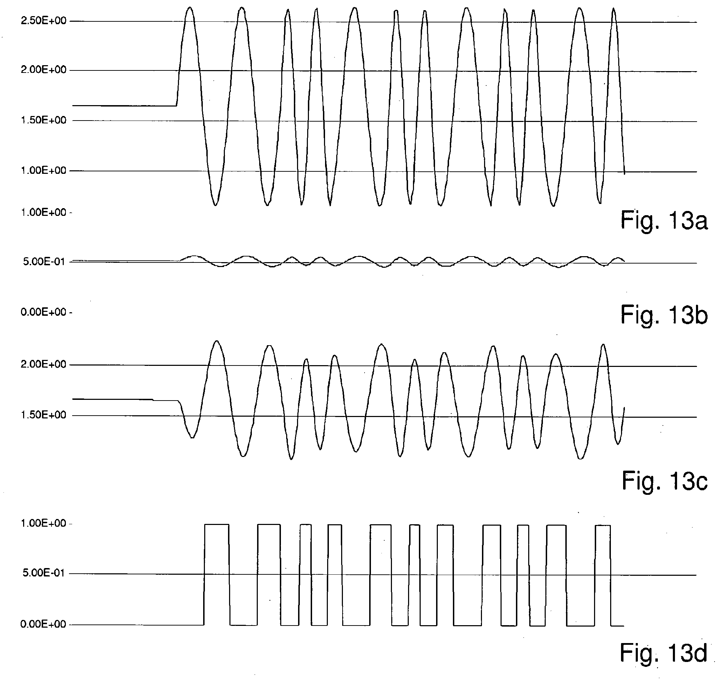

Receiving and decoding a HART signal will now be described with reference to Figures 12 and Figures 13a - 13d. The signal received via 73b is band pass filtered by band pass filter 81 which in one embodiment of the invention has a frequency response as shown in Figure 12. The microcomputer 114 performs zero crossing demodulation of the analogue FSK HART input signal.

Figure 13a - Figure 13d show typical time domain signals. Figure 13a is a representation of an ideal modulated signal. Figure 13b represents the low amplitude signal seen at the input to the bandpass filter 81. Figure 13c represents the output of the bandpass filter 81, which has a passband gain of about 3. The resulting bandpass filtered signal is fed to the micro-computer 114.

The microcomputer 114 utilises a comparator 119 (Figure 9) to determine zero crossings. The zero crossings are represented in Figure 13d. Detected zero-crossings are used by discriminator software running in the micro-computer 114 to reconstruct the input data. Two consecutive long transition times represent a logic 1, two consecutive short transition times represent a logic 0.

It will be understood by those skilled in the art that the HART I/O method and apparatus described above represents could equally well be employed for HART I/O over a 4-20mA analogue output signalling loop as well as the 4-20mA input signalling loop described above.

It will be appreciated that certain features of the invention, which are, for clarity, described in the context of separate embodiments, may also be provided in combination in a single embodiment. Conversely, various features of the invention which are, for brevity, described in the context of a single embodiment, may also be provided separately, or in any suitable combination.

It is to be recognized that various alterations, modifications, and/or additions may be introduced into the constructions and arrangements of parts described above without departing from the scope of the present invention as defined in the appended claims.

## Claims

1. A method of generating a semi-sinusoidal frequency shift keying waveform signal suitable for communication with HART sensors In a field device for superimposition on an analogue current signal, said method comprising the steps of:
generating a digital PWM signal (114a), said digital PWM signal (114a) comprising a first low frequency signal encoding digital data and a second, higher frequency PWM signal superimposed on transitions between two levels; and
filtering the digital PWM signal (114a) using a passive RLC filter (83).

2. A method according to claim 1, in which the digital PWM signal (114a) is gated with an enable signal (118a), such that the digital PWM signal (114a) is disabled when there is no enable signal (118a) present.

3. A method according to claim 1 or claim 2, in which the first low frequency signal comprises a first frequency of 1200 Hz.

4. A method according to any preceding claim, In which the second, higher frequency PWM signal comprises a frequency of approximately 100 KHz.

5. An apparatus for generating a semi-sinusoidal frequency shift keying waveform signal suitable for communication with HART sensors in a field device for superposition on an analogue current signal comprising:
a microprocessor (114) arranged in operation to generate a digital PWM signal (114a), said digital PWM signal (114a) comprising: a first low frequency signal encoding digital data; and a second, higher frequency pulse width modulated signal superimposed on transitions between two levels; and an RLC filter (83) arranged to receive the digital PWM signal (114a).

6. An apparatus according to claim 5, further comprising a gate (82) between the microprocessor (114) and the RLC filter (83), and in which the gate (82) receives the digital PWM signal (114a) and an enable signal (118a).

7. An apparatus according to claim 5 or claim 6, further comprising a pair of capacitors (84) in series with the RLC filter (83) output.

8. An apparatus according to any one of claims 5 to 7, in which the first low frequency signal comprises a first frequency of 1200 Hz.

9. An apparatus according to any one of claims 5 to 8, in which the second, higher frequency PWM signal comprises a frequency of approximately 100 KHz.

10. An Industrial Process control apparatus (71) having an input channel (73b) for receiving sensor signals on an analogue current loop and an apparatus for generating a semi-sinusoidal frequency shift keying waveform signal according to claim 5.

11. An Industrial Process control apparatus (71) having an output channel (73b) for sending sensor signals on an analogue current loop and an apparatus for generating a semi-sinusoidal frequency shift keying waveform signal according to claim 6.

## Patentansprüche

1. Verfahren zum Erzeugen eines halbsinusförmigen Frequenzumtastungswellenformsignals, welches zur Kommunikation mit HART-Sensoren in einer Feldvorrichtung geeignet ist, zum Überlagern auf ein analoges Stromsignal, wobei das Verfahren folgende Schritte umfasst:
Erzeugen eines digitalen PWM-Signals (114a), wobei das digitale PWM-Signal (114a) ein erstes tieffrequentes Signal, welches digitale Daten kodiert, und ein zweites höherfrequentes PWM-Signal, welches Übergängen zwischen zwei Pegeln überlagert ist, umfasst; und
Filtern des digitalen PWM-Signals (114a) mittels eines passiven RLC-Filters (83).

2. Verfahren nach Anspruch 1, wobei das digitale PWM-Signal (114a) mittels eines Freigabesignals (118a) gegatet wird, so dass das digitale PWM-Signal (114) gesperrt ist, wenn kein Freigabesignal (118a) vorhanden ist.

3. Verfahren nach Anspruch 1 oder 2, wobei das erste tieffrequente Signal eine erste Frequenz von 1200 Hz umfasst.

4. Verfahren nach einem der vorhergehenden Ansprüche, wobei das zweite höherfrequente PWM-Signal eine Frequenz von etwa 100 kHz umfasst.

5. Vorrichtung zum Erzeugen eines halbsinusförmigen Frequenzumtastungswellenformsignals, welches zur Kommunikation mit HART-Sensoren in einer Feldvorrichtung geeignet ist, zum Überlagern eines analogen Stromsignals, umfassend:
einen Mikroprozessor (114), welcher, während des Betriebs, zum Erzeugen eines digitalen PWM-Signals (114a) eingerichtet ist, wobei das PWM-Signal (114a) umfasst: ein erstes tieffrequentes Signal, welches digitale Daten kodiert; und ein zweites höherfrequentes pulsbreitenmoduliertes Signal, welches Übergänge zwischen zwei Pegeln überlagert; und einen RLC-Filter (83), welcher zum Empfangen des digitalen PWM-Signals (114a) eingerichtet ist.

6. Vorrichtung nach Anspruch 5, ferner umfassend ein Gate (82) zwischen dem Mikroprozessor (114) und dem RLC-Filter (83), und wobei das Gate (82) das digitale PWM-Signal (114a) und ein Freigabesignal (118a) empfängt.

7. Vorrichtung nach Anspruch 5 oder Anspruch 6, ferner umfassend ein Paar von Kondensatoren (84), welche in Reihe mit dem RLC-Filter (83) geschaltet sind.

8. Vorrichtung nach einem der Ansprüche 5 bis 7, wobei das erste tieffrequente Signal eine erste Frequenz von 1200 Hz umfasst.

9. Vorrichtung nach einem der Ansprüche 5 bis 8, wobei das zweite, höherfrequente PWM-Signal eine Frequenz von etwa 100 kHz umfasst.

10. Vorrichtung (71) zum Steuern eines Industrieprozesses mit einem Eingabekanal (73b) zum Empfangen von Sensorsignalen auf einer analogen Stromschleife und einer Vorrichtung zum Erzeugen eines halbsinusförmigen Frequenzumtastungswellenformsignals nach Anspruch 5.

11. Vorrichtung (71) zum Steuern eins Industrieprozesses mit einem Ausgabekanal (73b) zum Senden von Sensorsignalen auf einer analogen Stromschleife und einer Vorrichtung zum Erzeugen eines halbsinusförmigen Frequenzumtastungswellenformsignals nach Anspruch 6.

## Revendications

1. Procédé de génération d'un signal de forme d'ondes à modulation par déplacement de fréquence semi-sinusoïdale pertinent à des fins de communication avec des capteurs HART dans un dispositif de terrain en vue d'une superposition sur un signal de courant analogique, ledit procédé comprenant les étapes ci-dessous consistant à :
générer un signal de modulation PWM numérique (114a), ledit signal de modulation PWM numérique (114a) comprenant un premier signal basse fréquence codant des données numériques et un second signal de modulation PWM de plus haute fréquence superposé sur des transitions entre deux niveaux ; et
filtrer le signal de modulation PWM numérique (114a) en utilisant un filtre RLC passif (83).

2. Procédé selon la revendication 1, dans lequel le signal de modulation PWM numérique (114a) est transmis par porte avec un signal d'activation (118a), de sorte que le signal de modulation PWM numérique (114a) est désactivé lorsqu'aucun signal d'activation (118a) n'est présent.

3. Procédé selon la revendication 1 ou 2, dans lequel le premier signal basse fréquence comprend une première fréquence de 1 200 Hz.

4. Procédé selon l'une quelconque des revendications précédentes, dans lequel le second signal de modulation PWM de plus haute fréquence comprend une fréquence d'environ 100 kHz.

5. Appareil destiné à générer un signal de forme d'ondes à modulation par déplacement de fréquence semi-sinusoïdale pertinent à des fins de communication avec des capteurs HART dans un dispositif de terrain en vue d'une superposition sur un signal de courant analogique, comprenant :
un microprocesseur (114) agencé en fonctionnement de manière à générer un signal de modulation PWM numérique (114a), ledit signal de modulation PWM numérique (114a) comprenant : un premier signal basse fréquence codant des données numériques ; et un second signal de modulation d'impulsions en durée de plus haute fréquence superposé sur des transitions entre deux niveaux ; et un filtre RLC (83) agencé de manière à recevoir le signal de modulation PWM numérique (114a).

6. Appareil selon la revendication 5, comprenant en outre une porte (82) entre le microprocesseur (114) et le filtre RLC (83), et dans lequel la porte (82) reçoit le signal de modulation PWM numérique (114a) et un signal d'activation (118a).

7. Appareil selon la revendication 5 ou 6, comprenant en outre une paire de condensateurs (84) en série avec la sortie du filtre RLC (83).

8. Appareil selon l'une quelconque des revendications 5 à 7, dans lequel le premier signal basse fréquence comprend une première fréquence de 1 200 Hz.

9. Appareil selon l'une quelconque des revendications 5 à 8, dans lequel le second signal de modulation PWM de plus haute fréquence comprend une fréquence d'environ 100 kHz.

10. Appareil de commande de processus industriel (71) présentant un canal d'entrée (73b) pour recevoir des signaux de capteur sur une boucle de courant analogique et un appareil destiné à générer un signal de forme d'ondes à modulation par déplacement de fréquence semi-sinusoïdale selon la revendication 5.

11. Appareil de commande de processus industriel (71) présentant un canal de sortie (73b) pour envoyer des signaux de capteur sur une boucle de courant analogique et un appareil destiné à générer un signal de forme d'ondes à modulation par déplacement de fréquence semi-sinusoïdale selon la revendication 6.
